# EUROPEAN PATENT SPECIFICATION

(11) **EP 1 076 020 B1**
(45) Date of publication and mention of the grant of the patent: **03.12.2003**
(21) Application number: 00201825.7
(22) Date of filing: 23.05.2000
(51) Int. Cl.: B65G 47/252

(54) **Erecting device for a transport conveyor of articles**
Aufrichtvorrichtung au einem Förderer für Gegenstände
Dispositif d'érection pour le transport d'articles

(30) Priority: 13.08.1999 FI 991725
(43) Date of publication of application: 14.02.2001
(73) Proprietor: Bevesys Oy, 45100 Kouvola (FI)
(72) Inventor: Paavola, Hannu, 45130 Kouvola (FI); Hautamäki, Mika, 45200 Kouvola (FI)
(74) Representative: Heinänen, Pekka Antero

(56) References cited:
- EP-A- 0 462 497
- US-A- 3 894 628
- US-A- 4 854 442
- US-A- 5 029 694
- US-A- 5 934 440

## Description

The present invention relates to an erecting device for a conveyor of different kinds of horizontally transported articles such as is used in the intake device of an automated redemption machine for returnable containers like bottles, cans, etc., said erecting device being located at the delivery end of the conveyor, either integral with the conveyor end or adapted as an extension thereof so as to serve for lifting the articles from an essentially horizontal position into an upright position for delivery to the next conveyor section or other processing steps.

This kind of erecting device can be used in, e.g., automated redemption machines into which bottles, cans and the like containers are returned bottom first in an essentially horizontal position. Herein, the term container must be understood to refer to all kinds of empty returnable containers including glass and plastic bottles and cans. The size and weight of these containers may vary within very large limits. For instance, the intake device may have to handle in succession a bottle having a bottom diameter of about 15 cm and a weight in excess of 1 kg followed by an extremely small minibar-size bottle typically used for alcoholic beverages. One embodiment of such a machine is known from publication WO 9802255. A benefit obviously gained by the horizontal intake position over traditional intake with the container standing in the upright position is that the returned container cannot topple when being placed onto the intake device conveyor. Particularly, plastic bottles that are widely used today are so light when empty that they are very difficult to keep upright. A toppled container in most cases causes a malfunction of the automated redemption machine or the customer may remain short of the refund. Moreover, modern automated redemption machines are expected to fulfill extremely tough requirements in regard to the automated machine's capability of identifying and handling containers of most varied character. This situation puts the intake device under stringent demands.

The present invention concerns particularly the delivery end of the intake device conveyor at which point a horizontally traveling returnable container needs to be oriented upright before being delivered to the next conveyor. One approach to this need is described in publication WO 9802371, wherein the returned bottles are passed from the horizontal intake conveyor into a downward slanting trough that orients the bottles upright.

US-A 5,029,694 discloses an erecting device suitable for conveyors of different kinds of horizontally transported articles. Said erecting device is located at the delivery end of the conveyor and is adapted to serve for lifting the articles from a horizontal position into an upright position for delivery to the next conveyor section. Further, the erecting device of the US patent comprises rubber disks which grasp the bottle and rotate the same into vertical position with a continuous movement of the rubber disks.

It is an object of the present invention to provide a container erecting device for the delivery end of an intake conveyor, said erecting device featuring an uncomplicated construction combined with secure operation An erecting device according to the invention is characterized in that said erecting device comprises pivotally mounted elements moving reciprocally between two end positions, whose gripping members grasp the article, rotate the same into a vertical position, e.g. onto a conveyor for the next handling step, release the grip and return into their home position.

A preferred embodiment of the invention is characterized in that the erecting device is located to act as an extension of the intake device serving as a conveyor and that said gripping members are formed into bent planar walls pivotally connected to each other so as to provide a variable space therebetween and that the intake device is aligned downward slanting in the downstream direction at least just prior to the erecting device.

A still another preferred embodiment of the invention is characterized in that the gripping members are formed into gripper fingers aligned into two opposed rows that are aligned essentially parallel to each other and have a variable space provided therebetween.

A still another preferred embodiment of the invention is characterized in that the delivery end of the intake device has slots adapted thereto essentially transverse to the intake device conveyor travel direction, said slots permitting said gripper fingers to be elevated and lowered therethrough.

A still another preferred embodiment of the invention is characterized in that said intake device comprises a plural succession of intake transport elements, which are aligned essentially transverse to the conveyor travel direction and have gaps adapted between said transport elements, and that said intake transform elements form two parallel-running essentially planar half-conveyors having a gap adapted therebetween longitudinally in the conveyor travel direction and that in the home position of the erecting device the gripper fingers are at least partially situated in the gaps between said intake transport elements, whereby the elongated arms on which the gripper fingers are mounted are at least partially situated in the longitudinal gap between said half-conveyors.

The erecting device according to the invention is free from complicated and expensive structures by virtue of having a very simple construction. As the erecting device with its actuators is located at the delivery end of the intake device and does not essentially require any additional footprint, the construction is space-saving in the depth dimension of the automated container redemption machine.

In the following, the invention will be described in greater detail with the help of a preferred exemplifying embodiment by making reference to the appended drawings in which
FIG. 1 shows an intake device used in the invention as seen obliquely from the intake end with a bottle traveling downstream in a bottom leading position toward the delivery end of the intake device;
FIG. 2-7 show the intake device in the different operating stages of the erecting device as seen obliquely from the delivery end of the intake device;
FIG. 8 shows in a detail view an embodiment of the erecting device according to the invention; and
FIG. 9 shows in a detail view another embodiment of the erecting device according to the invention.

In the diagrams, a conveyor or an intake device is generally designated by reference numeral 1, said conveyor or intake device in the illustrated exemplifying embodiment being comprised of two mutually essentially identical half-conveyors that are tilted so as to form an essentially V-shaped angle therebetween as can be seen from the diagrams, said half-conveyors serving to support an article 4 being transported thereon so that one side of the article rests on one half-conveyor and the other side on the other half-conveyor. One half-conveyor may be formed by a set of transverse aligned intake transport elements 2 and the other half-conveyor by another set of transverse aligned intake transport elements 3. The intake transport elements 2, 3 may be, e.g., driven conveyor rollers or rolls that are rotated by means of a suitable mechanism. It must be noted, however, that the invention is not limited in any manner to the construction of the conveyor (or the intake device). The half-conveyors may have one or more sections in which the intake transport elements are driven independently from the other sections.

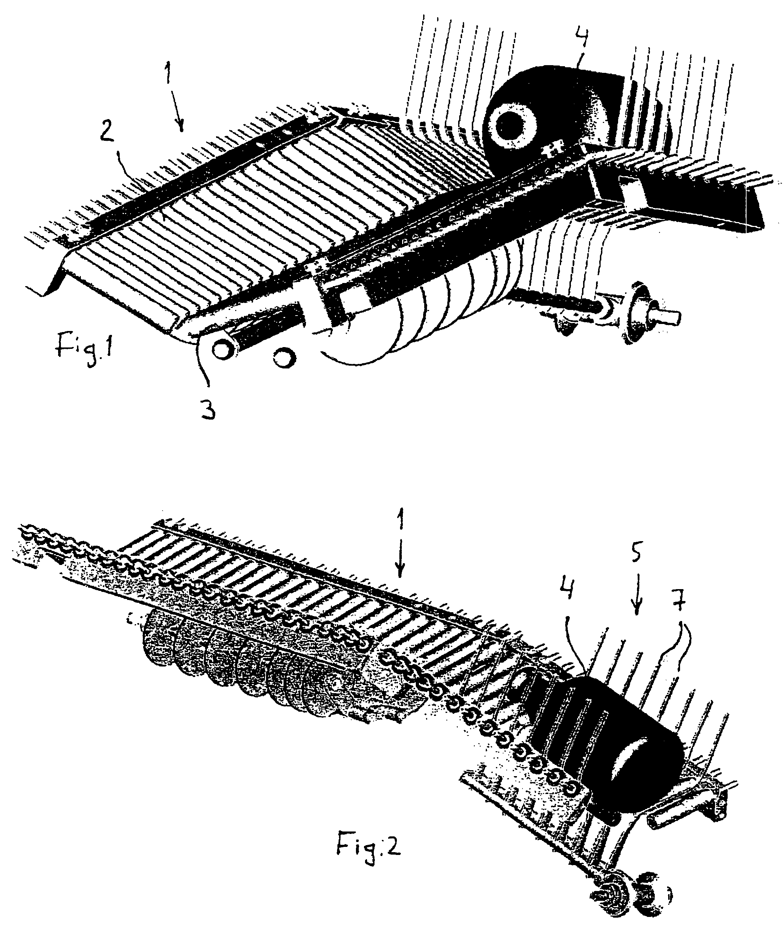

The article to be transferred, such as a returnable bottle 4 in the illustrated case, is placed onto the intake device. In the intake device shown in FIG. 1, the intake occurs at the front end of the intake device. Also the bottle identification and other similar steps are carried out at the front-end portion of the intake device. As these steps are entirely irrelevant to the spirit of the invention, a detailed description of their implementation may be omitted herein. In the situation illustrated in FIG. 1, the bottle has already traveled on the intake device conveyor close to the delivery end of the intake device, where the orientation of the bottle into an upright position and placement on, e.g., a conveyor for the next handling step are brought about. For this purpose, the intake device is complemented with an erecting device 5.

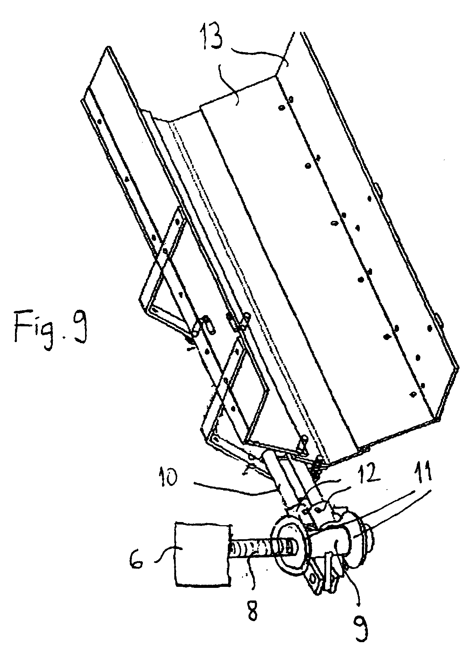

In FIG. 2 the bottle 4 has already reached the erecting device 5. At this instant, the conveyor means of the latter section of the intake device 1 are stopped and an actuator 6 of the erecting device is started, see FIGS. 8 and 9. In the illustrated exemplifying embodiment, the erecting device comprises two rows of gripper fingers 7 aligned essentially parallel to each other. In their home position, the gripper fingers are withdrawn into the gaps adapted between the intake transport elements in order to permit unobstructed travel of the bottle to the location of the erecting device 5. Due to the longitudinal gap adapted between the half-conveyors, neither will any other part of the erecting device interfere with the travel of the bottle to this point.

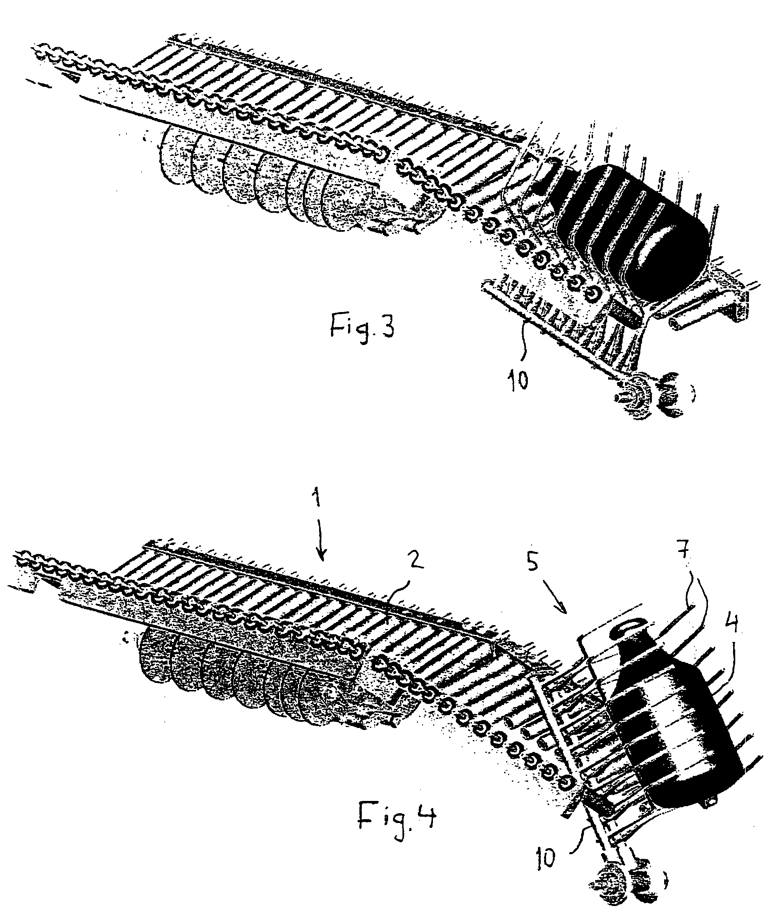

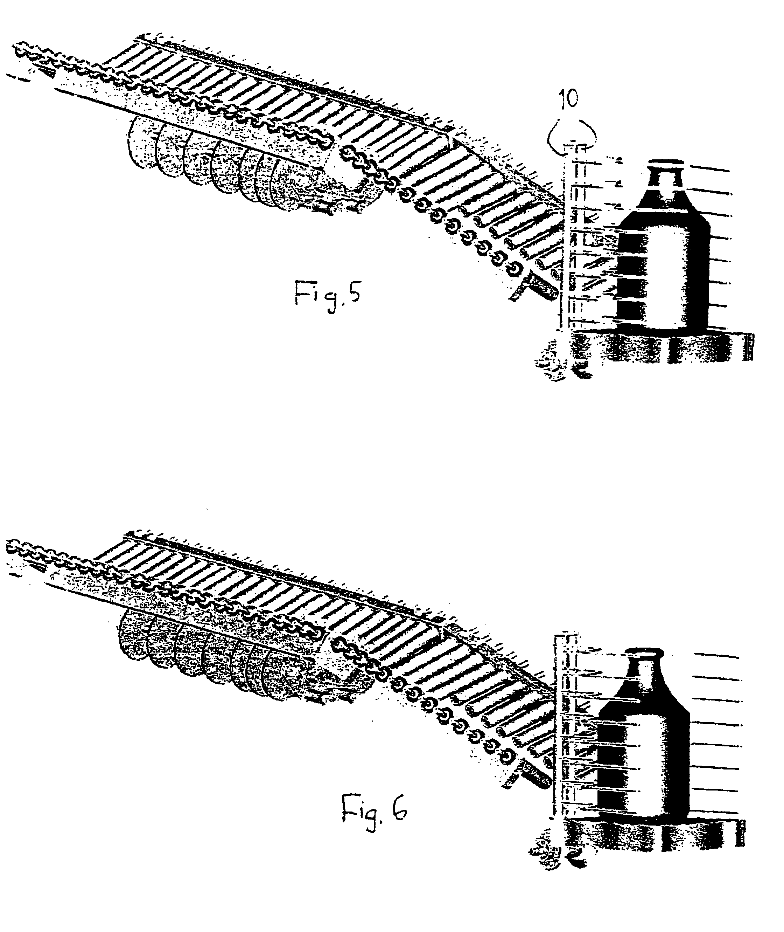

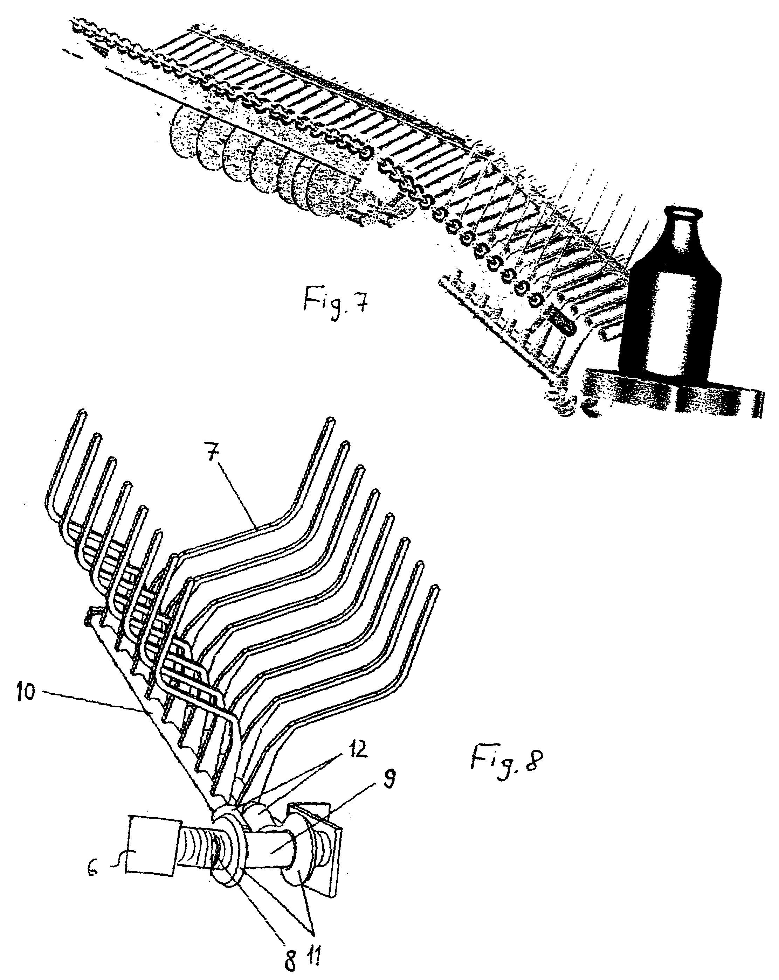

As the actuator 6 of the erecting device is started, the gripper fingers 7 begin to approach each other in the fashion shown in FIG. 3. When the gripper fingers cling about the periphery of the bottle 4 so tightly that the torque generating the compressive force exceeds that required for erecting the bottle, the erecting device with the bottle locked therein begins to tilt upright in the fashion shown in FIG. 4 until the erecting device reaches a fully upright position, see FIG. 5. After the erecting device has reached its upright position, the direction of rotation of the erecting device actuator drive motor is reversed, whereby the gripper fingers are driven apart until reaching their mechanically limited home position where the gripper is fully open. Then, the bottle 4 remains resting on the delivery table, e.g., on a conveyor belt, see FIG. 6. When the actuator motor of the erecting device 5 is driven still further in the same direction, the erecting device will be rotated back into the gaps of the intake device as shown in FIG. 7.

In FIG. 8 is shown the construction of a preferred embodiment of the erecting device according to the invention in a more detailed view. The function of the erecting device is based on mounting onto the drive shaft 8 driven by the actuator 6 on bearings a second shaft 9 having therefrom projecting two stub shafts on which tubular arms 10 are pivotally mounted. On the tubular portions of the arms are permanently mounted gripper fingers 7 forming a gripper capable of holding a bottle. The arms 10 and the drive shaft 8 are connected to each other via bevel gears 11, 12. The first gears 11 are mounted on the drive shaft 8, while the second gears 12 are mounted to the ends of the arms 10. A preset braking force (torque) is applied to the second shaft to keep it stalled.

When the actuator 6 is activated to rotate the drive shaft 8, the shaft rotates the arms 10 via the gears. The other shaft 9 will not rotate at this instant as it is stalled under a preset braking force (torque). As the arms 10 rotate, they make the gripper fingers 7 which are permanently connected thereto to rotate thus making the space remaining between the fingers smaller. The gripper fingers rotate until they reach a mechanically limited closed position or an article (such as a bottle) is clamped between the fingers so as to prevent them from approaching any closer to each other. At this instant, the force (torque) required for moving the gripper fingers toward each other exceeds the braking force (torque) that has kept the second shaft 9 stalled, whereupon the space between the gripper fingers cannot become any smaller, but instead, the second shaft 9 begins to rotate with the actuator output shaft under the force transmitted over the meshing gears. Herein, if the gripper fingers have grasped a bottle, for instance, the erecting device will impose on the bottle a grip force proportional to the braking force and simultaneously the erecting device performs orientation of the article into an upright position. The actuator 6 is kept rotating until the arms 10 with the bottle 4 gripped therebetween have been erected upright.

Next, the direction of rotation of the actuator 6 is reversed. Then, the braking force (torque) prevents the second shaft 9 from rotating and the gears will transmit the rotating torque to the arms 10 that open the gripper formed by the gripper fingers 7. The gripper is driven into its mechanically limited open position. At this point, the force (torque) required to drive the gripper further open exceeds the braking force (torque) and, hence, the second shaft 9 begins to rotate with the drive shaft 8. The actuator 6 is kept rotating until the gripper is driven back into its home position.

In FIG. 9 is shown an alternative embodiment of the erecting device having the gripper formed by bent planar walls 13 pivotally connected to each other so as to act as gripper elements for grasping an article. This exemplifying embodiment differs from that described above by not being located integral with the intake device conveyor, but instead, as an extension thereof. Thence, the delivery end of the intake device conveyor must be made downward slanting to make the article being transported to slide gravitationally from the intake device onto the erecting device. The closing and upright erecting mechanisms of the erecting device, as well as the opening and tilting mechanisms thereof, can be implemented in the same fashion as described in conjunction with the fingered gripper construction, see FIG. 8.

To those skilled in the art, it is obvious that the invention is not limited to the above-described exemplifying embodiments, but rather, may be modified within the scope of the appended claims. Hence, when reference in the above description is made to a bottle, the transferred article may as well be a can or any other similar returnable article. Further, the intake end of the intake device need not have such a construction that is described by way of example in the drawings, but rather, may be implemented in any conventional manner. As many of the elements illustrated in the drawings are essentially identical, not all of them are denoted by reference numerals.

## Claims

1. Erecting device (5) for a conveyor of different kinds of horizontally transported articles (4) such as is used in the intake device (1) of an automated redemption machine for returnable containers like bottles, cans, etc., said erecting device being located at the delivery end of the conveyor, either integral with the conveyor end or adapted as an extension thereof so as to serve for lifting the articles from an essentially horizontal position into an upright position for delivery to the next conveyor section or other processing steps, **characterized in that** said erecting device (5) comprises pivotally mounted elements moving reciprocally between two end positions, whose gripping members (7; 13) grasp the article (4), rotate the same into a vertical position, e.g. onto a conveyor for the next handling step, release the grip and return into their home position.

2. Erecting device according to claim 1, **characterized in that** the erecting device (5) is located to act as an extension of the intake device (1) serving as a conveyor and that said gripping members are formed into bent planar walls (13) pivotally connected to each other so as to provide a variable space therebetween and that the intake device (1) is aligned downward slanting in the downstream direction at least just prior to the erecting device (5).

3. Erecting device according to claim 1, **characterized in that** the gripping members are formed into gripper fingers (7) aligned into two opposed rows that are aligned essentially parallel to each other and have a variable space provided therebetween.

4. Erecting device according to claim 3, **characterized in that** the delivery end of the intake device (1) has slots adapted thereto essentially transverse to the intake device conveyor travel direction, said slots permitting said gripper fingers (7) to be elevated and lowered therethrough.

5. Erecting device according to claim 4, **characterized in that** the intake device (1) comprises a plural succession of intake transport elements (2. 3), which are aligned essentially transverse to the conveyor travel direction and have gaps adapted between said transport elements, and that said intake transport elements form two parallel-running essentially planar half-conveyors having a gap adapted therebetween longitudinally in the conveyor travel direction and that in the home position of the erecting device (5) the gripper fingers (7) are at least partially situated in the gaps between said intake transport elements (2; 3), whereby the elongated arms (10) on which the gripper fingers (7) are mounted are at least partially situated in the longitudinal gap between said half-conveyors.

6. Erecting device according to claim 5, **characterized in that** the arms (10) on which the gripper fingers (7) are mounted are connected via a rotating mechanism (8, 9, 11, 12) to a bidirectionally controllable actuator (6).

7. Erecting device according to claim 6, **characterized in that** the rotating mechanism comprises a drive shaft (8) having mounted thereon on bearings a second shaft (9) having therefrom projecting two stub shafts on which said tubular arms (10) are pivotally mounted, said arms and said drive shaft being connected to each other via bevel gears (11, 12), wherein the first gears (11) are mounted on the drive shaft (8) and the second gears (12) are mounted to the ends of the arms (10).

8. Erecting device according to claim 4, **characterized in that** the rotating movement of the second shaft (9) is held stalled by a preset braking force.

## Patentansprüche

1. Aufrichtvorrichtung (5) für einen Förderer für unterschiedliche Arten von horizontal transportierten Gegenständen (4) wie er in einer Einlasseinrichtung (1) einer automatischen Einlösemaschine für Mehrwegbehälter wie Flaschen, Dosen etc. verwendet wird, wobei die Aufrichtvorrichtung an dem Abgabeende des Förderers entweder einstückig mit dem Ende des Förderers oder als Verlängerung davon angepasst ist, um so zum Heben der Gegenstände aus einer im Wesentlichen horizontalen Position in eine aufrechte Position zum Abgeben an den nächsten Abschnitt des Förderers oder andere Arbeitsschritte zu dienen, **dadurch gekennzeichnet, dass** die Aufrichtvorrichtung (5) gelenkig angebrachte Elemente umfasst, die sich wechselweise zwischen zwei Endpositionen bewegen, deren Greifbauteile (7; 13) den Gegenstand (4) greifen, denselben in eine vertikale Position, beispielsweise auf einen Förderer für den nächsten Behandlungsschritt, drehen, den Griff lösen und in ihre Ausgangsposition zurückkehren.

2. Aufrichtvorrichtung gemäß Anspruch 1, **dadurch gekennzeichnet, dass** die Aufrichtvorrichtung (5) angeordnet ist, um als Verlängerung der als Förderer dienenden Eingabeeinrichtung (1) zu wirken, und dass die Greifbauteile als gebogene, ebene Wände (13) ausgebildet sind, die gelenkig miteinander verbunden sind, um so einen variablen Raum dazwischen bereit zu stellen, und dass die Eingabeeinrichtung (1) nach unten geneigt in der stromabwärtigen Richtung zumindest unmittelbar vor der Aufrichtvorrichtung (5) ausgerichtet ist.

3. Aufrichtvorrichtung gemäß Anspruch 1, **dadurch gekennzeichnet, dass** die Greifbauteile als Greiffinger (7) ausgebildet sind, die in zwei gegenüberliegenden Reihen ausgerichtet sind, welche im Wesentlichen parallel zueinander ausgerichtet sind und einen dazwischen bereit gestellten variablen Raum aufweisen.

4. Aufrichtvorrichtung gemäß Anspruch 3, **dadurch gekennzeichnet, dass** das Abgabeende der Eingabeeinrichtung (1) Schlitze aufweist, die an diese im Wesentlichen transversal zu der Fördererbewegungsrichtung der Eingabeeinrichtung angepasst sind, wobei die Schlitze ein Heben und Senken der Greiffinger (7) dadurch erlauben.

5. Aufrichtvorrichtung gemäß Anspruch 4, **dadurch gekennzeichnet, dass** die Eingabeeinrichtung (1) eine mehrfache Aufeinanderfolge von Eingabetransportelementen (2; 3) umfasst, die im Wesentlichen transversal zu der Fördererbewegtingsrichtung ausgerichtet sind und Spalte aufweisen, die zwischen den Transportelementen angepasst sind, und dass die Eingabetransportelemente zwei parallel laufende, im Wesentlichen ebene Halbförderer mit einem dazwischen longitudinal in der Fördererbewegungsrichtung angepassten Spalt bilden, und dass in der Ausgangsposition der Aufrichtvorrichtung (5) die Greiffinger (7) sich zumindest teilweise in den Spalten zwischen den Eingabetransportelementen (2; 3) befinden, wodurch die länglichen Arme (10), auf welchen die Greiffinger (7) befestigt sind, sich zumindest teilweise in dem longitudinalen Spalt zwischen den Halbförderem befinden.

6. Aufrichtvorrichtung gemäß Anspruch 5, **dadurch gekennzeichnet, dass** die Arme (10) auf welchen die Greiffinger (7) befestigt sind, über einen Drehmechanismus (8, 9, 11,12) an einen in zwei Richtungen steuerbaren Aktuator (6) gekoppelt sind.

7. Aufrichtvorrichtung gemäß Anspruch 6, **dadurch gekennzeichnet, dass** der Drehmechanismus eine Antriebswelle (8) mit einer darauf auf Lagern befestigten zweiten Welle (9) umfasst, die zwei aus ihr herausragende Flanschwellen aufweist, auf welchen die rohrförmigen Arme (10) gelenkig befestigt sind, wobei die Arme und die Antriebswelle aneinander über Kegelradgetriebe (11, 12) gekoppelt sind, wobei die ersten Kegelradgetriebe (11) auf der Antriebswelle (8) und die zweiten Kegelradgetriebe (12) an den Enden der Arme (10) befestigt sind.

8. Aufrichtvorrichtung gemäß Anspruch 4, **dadurch gekennzeichnet, dass** die Drehbewegung der zweiten Welle (9) durch eine vorbestimmte Bremskraft blockiert gehalten wird.

## Revendications

1. Dispositif d'érection (5) pour un convoyeur de différentes sortes d'articles (4) transportés horizontalement, utilisé, par exemple, dans le dispositif d'introduction (1) d'une machine de récupération automatisée pour des emballages consignés tels que bouteilles, boîtes, etc., ledit dispositif d'érection étant installé à la sortie du convoyeur, soit solidaire de l'extrémité de ce convoyeur, soit adapté comme une extension de celui-ci, de façon à assurer l'érection des pièces dans une position verticale, à partir d'une positon sensiblement horizontale, et à les transférer dans la section suivante du convoyeur, ou vers des stades ultérieurs de traitement, **caractérisé en ce que** ledit dispositif d'érection (5) comprend des éléments montés rotatifs se déplaçant l'un par rapport à l'autre entre deux positions extrêmes, dont les éléments de prévention (7 ; 13) saisissent la pièce (4), assurent la rotation de cette dernière en position verticale, par exemple sur un convoyeur pour le prochain stade de manipulation, retirent la prise et retournent dans leur position de repos.

2. Dispositif d'érection selon la revendication 1, **caractérisé en ce que** le dispositif d'érection (5) est placé de façon à fonctionner comme une extension du dispositif d'admission (1) servant de convoyeur et que les éléments de saisie sous la forme de parois planes coudées (13) reliées entre elles d'une façon rotative de façon à former entre elles un espace variable et **en ce que** le dispositif d'admission (1) est aligné incliné vers le bas dans la direction aval, au moins juste avant le dispositif d'érection (5).

3. Dispositif d'érection selon la revendication 1, **caractérisé en ce que** les éléments de prise sont formés dans des doigts de préhension (7) alignés suivant deux rangées opposées qui sont alignées de manière sensiblement parallèles entre elles et qu'il existe entre ces dernières, un espace variable

4. Dispositif d'érection selon la revendication 3, **caractérisé en ce que** l'extrémité de sortie du dispositif d'admission (1) comporte des encoches adaptées à celui-ci, sensiblement perpendiculaires à la direction du mouvement du convoyeur du dispositif d'admission, lesdites encoches permettant de lever ou de baisser à travers elles, lesdits doigts de préhension (7).

5. Dispositif d'érection selon la revendication 4, **caractérisé en ce que** le dispositif d'admission (1) comporte une pluralité d'éléments successifs de transport d'introduction (2, 3) alignés sensiblement transversalement par rapport à la direction du déplacement de ce convoyeur, que des intervalles sont ménagés entre lesdits éléments de transport, que lesdits éléments de transport forment deux demi-convoyeurs sensiblement plans se déplaçant parallèlement, avec un intervalle ménagé entre eux longitudinalement dans la direction du déplacement du convoyeur et **en ce que**, dans la positon de repos du dispositif d'érection (5), les doigts de préhension (7) se trouvent situés, au moins en partie, à l'intérieur des intervalles entre lesdits éléments de transport d'introduction (2 3 ), de sorte que les bras allongés (10) sur lesquels sont montés les doigts de préhension (7) sont disposés, au moins en partie, à l'intérieur de l'intervalle longitudinal entre lesdits demi-convoyeurs.

6. Dispositif d'érection selon la revendication 5, **caractérisé en ce que** les bras (10) sur lesquels sont montés les doigts de préhension (7) sont reliés par un dispositif rotatif (8, 9, 11,12) à un actionneur qui peut être commandé suivant deux directions (6).

7. Dispositif d'érection selon la revendication 6, **caractérisé en ce que** le mécanisme rotatif comprend un arbre d'entraînement (8) sur lequel est monté, sur des paliers, un second arbre (9) d'où se projettent deux faux arbres sur lesquels sont montés d'une façon rotative, lesdits arbres tubulaires (10), lesdits arbres et ledit arbre de commande étant reliés l'un à l'autre par des engrenages coniques à renvoi d'angle (11, 12), le premier engrenage (11) étant monté sur l'arbre d'entraînement (8) et le second engrenage (12) étant monté sur les extrémités des arbres (10).

8. Dispositif d'érection selon la revendication 4, **caractérisé en ce que** le mouvement de rotation de second arbre (9) est maintenu bloqué par une force de freinage préréglée.
